# EUROPEAN PATENT APPLICATION

(11) **EP 4 843 924 A1**
(43) Date of publication of application: **25.11.2026**
(21) Application number: 26179784.9
(22) Date of filing: 20.05.2026
(51) Int. Cl.: B65G 1/137, B65G 1/04, B65G 1/06

(54) **AUTOMATED WAREHOUSE**

(30) Priority: 22.05.2025 JP 2025085465
(71) Applicant: Daifuku Co., Ltd., Osaka-shi, Osaka 555-0012 (JP)
(72) Inventor: KIYOKAWA, Wataru, Tokyo, 1050022 (JP); HARUTA, Hiroaki, Tokyo, 1050022 (JP); YASUMA, Shohei, Tokyo, 1050022 (JP)
(74) Representative: Grosse, Felix Christopher

(57) **Abstract**

An automated warehouse 100 includes a first Y-directional path 1Y extending in a Y-direction Y, a first storage area 1, a first transporter 1T, and a control system 9. The first storage area 1 is disposed on a first side X1 in an X-direction X relative to the first Y-directional path 1Y, and includes multiple storage rows 10 each including storage sites to store multiple articles W as arranged in the X-direction X. The storage rows 10 are arranged in the Y-direction Y. The first transporter 1T transports articles W into and out of a storage row 10. The control system 9 manages multiple articles W to be stored in the first storage area 1 in groups. To transport articles W included in a group of receipt-target articles W into the first storage area 1 using the first transporter 1T, the control system 9 selects, as a transport destination, a storage row 10 with a storable-article number closest to the number of articles W included in the group.

## Description

The present invention relates to an automated warehouse including a storage area for storing multiple articles and a transporter that transports the articles within the storage area.

An example of such an automated warehouse is described in JP 2019 - 218 195 A. In the background described below, reference signs and names in parentheses are the reference signs and the names in JP 2019 - 218 195 A.

The automated warehouse (automated warehouse system 100) described in JP 2019 - 218 195 A includes storage areas (storage shelves 22) for storing multiple articles (loads 12), transport paths (second rails 44) for articles to be stored along the storage areas (storage shelves 22), and transporters (dollies) that transport articles (loads 12) along the transport paths (second rails 44). The storage areas (storage shelves 22) include storage rows (24) for storing articles (loads 12) arranged in a direction perpendicular to the transport paths (second rails 44). Each transporter (dolly) can transport an article (load 12) into and out of any storage row (24). When multiple articles (loads 12) are stored in a storage row (24), a transporter (dolly) rearranges the articles and then issues an article (load 12) stored at a storage site on the far side of the storage row (24). Rearrangement herein refers to an operation of the transporter (dolly) to move the articles (loads 12) stored at the storage sites on the near side of the storage row (24) to, for example, another storage row (24).

In the automated warehouse (automated warehouse system 100) described in JP 2019 - 218 195 A, a path that involves a relatively short travel distance or travel time is selected from multiple candidates as a path on which each transporter (dolly) moves articles (loads 12) for rearrangement of the articles (loads 12). This improves transport efficiency for articles (loads 12) with the transporters (dollies).

However, with a recent increase in the quantity and types of articles to be stored, such an automated warehouse as described in JP 2019 - 218 195 A tends to have difficulty in improving transport efficiency for articles with the transporters. An increase in the article types to be handled can complicate the route setting for the transporters to move articles for, for example, rearrangement. Such setting can also lengthen the transport paths on which the transporters transport the articles.

Hence, it is an object of the present invention to provide an automated warehouse that can easily improve article transport efficiency.

This object is solved with an automated warehouse according to the present invention as claimed by the appending claims and the technique described below is provided.

An automated warehouse according to the present invention includes a Y-directional path extending in a Y-direction and a storage area disposed on a first side in an X-direction relative to the Y-directional path. The X-direction is perpendicular to the Y-direction. The storage area includes a plurality of storage rows arranged in the Y-direction. Each of the plurality of storage rows includes storage sites to store a plurality of articles as arranged in the X-direction. The automated warehouse includes a transporter that transports at least one article along the Y-directional path and into and out of a storage row among the plurality of storage rows, and a control system that controls the transporter. The control system manages the plurality of articles to be stored in the storage area in groups. The groups of articles include a target group to be transported into the storage area. The target group includes target articles. To transport the target articles included in the target group into the storage area using the transporter, the control system selects, among the plurality of storage rows, a storage row with a storable-article number greater than or equal to a target-article number and closest to the target-article number as a transport destination of the target articles. The target-article number is a number of target articles included in the target group. The storable-article number is a number of articles storable in, among the storage sites in each of the plurality of storage rows, storage sites other than storage sites in which articles are stored.

In this structure, articles included in the same group are highly likely to be stored in the same storage row. When the articles are transported out of the storage rows by the groups, this easily reduces the number of transport operations for articles, other than the articles to be transported out of the storage row, that are arranged on the side adjacent to the Y-directional path relative to the articles to be transported out of the storage row. This structure can also leave a maximum possible number of storage rows storing no article, thus increasing the likelihood that articles included in each group can be stored in the same storage row in storing the articles included in each group. This structure easily shortens the transport path to transport the multiple articles in the same group within the automated warehouse, as compared with when the multiple articles included in the same group are stored into multiple storage rows in a distributed manner. The article transportation efficiency can thus be improved easily.

According to another preferred aspect of the present invention, the control system may divide the target group into a plurality of subgroups in response to the target-article number being greater than a maximum storable-article number. The maximum storable-article number is the storable-article number of a storage row with a greatest storable-article number among the plurality of storage rows. The control system may cause a specific subgroup that is at least one of the plurality of subgroups to have a subgroup-article number equal to the maximum storable-article number. The subgroup-article number is a number of articles included in each of the plurality of subgroups. The control system may select a storage row with the maximum storable-article number among the plurality of storage rows as a transport destination of the articles included in the specific subgroup, and select, among the plurality of storage rows, a storage row other than the storage row with the maximum storable-article number as a transport destination of the articles included in a subgroup other than the specific subgroup among the plurality of subgroups.

When the target-article number of the target group is greater than the maximum storable-article number of the storage rows, this structure can leave a maximum possible number of storage rows storing no article. For a storage row in which articles are stored as well, this structure can leave a maximum possible number of storage sites other than the storage sites in which articles included in one group are stored. This increases the likelihood that articles included in each group can be stored in the same storage row in storing the articles included in each group.

According to another preferred aspect of the present invention, the Y-directional path may be a first Y-directional path, and the transporter may be a first transporter. The automated warehouse may further include a second Y-directional path disposed on the first side in the X-direction relative to the storage area and extending in the Y-direction, and a second transporter that transports the plurality of articles along the second Y-directional path and into and out of a storage row among the plurality of storage rows in the storage area. The groups of articles may include a first group and a second group different from the first group. The control system may select a first zone as a transport destination of the articles included in the first group and select a second zone as a transport destination of the articles included in the second group. The first zone includes an end on the first side in the X-direction of a storage row among the plurality of storage rows. The second zone is disposed on a second side in the X-direction relative to the first zone in the storage row.

This structure allows both the first transporter and the second transporter to transport articles into the first storage area. This allows articles included in different groups to be stored in the first zone and the second zone of each storage row in the first storage area. This reduces the percentage of empty storage sites in each storage row, and also easily increases the likelihood that articles included in the same group can be stored in the same storage row. The articles in each group can be transported out of the storage row from both sides in the X-direction by the first transporter and the second transporter. When the articles are transported out of the storage rows by the groups, this easily reduces the number of transport operations for articles stored in the storage sites relatively far from the Y-directional path corresponding to the transporter that transports an article out of the storage row.

According to another preferred aspect of the present invention, in the structure including the first Y-directional path and the second Y-directional path, the storage area may be a first storage area. The automated warehouse may further include a second storage area different from the first storage area. The second storage area may include a plurality of storage rows arranged in the Y-direction. The plurality of storage rows in the first storage area and the plurality of storage rows in the second storage area may have different lengths in the X-direction.

This structure easily increases the likelihood that a storage row with a storable-article number corresponding to the number of articles in each group can be selected when the numbers of articles in the groups are different. This increases the likelihood that articles included in each group can be stored in the same storage row in storing the articles included in each group.

According to another preferred aspect of the present invention, in the structure including the second storage area, the second storage area may be disposed on the second side in the X-direction relative to the first Y-directional path. The automated warehouse may further include a third storage area disposed on the first side in the X-direction relative to the second Y-directional path. The third storage area may include a plurality of storage rows arranged in the Y-direction. The plurality of storage rows in the second storage area and the plurality of storage rows in the third storage area may have different lengths in the X-direction.

This structure includes the third storage area in addition to the first storage area and the second storage area. The storage rows in the third storage area and the storage rows in the second storage area have different lengths in the X-direction. When each group includes a different number of articles, this structure further increases the likelihood that storage rows with storable-article numbers corresponding to the number of articles in each group can be selected. This further increases the likelihood that articles included in each group can be stored in the same storage row in storing the articles included in each group. In this structure, the second storage area is disposed on the second side in the X-direction relative to the first storage area with the first Y-directional path between the first storage area and the second storage area, and the third storage area is disposed on the first side in the X-direction relative to the first storage area with the second Y-directional path between the first storage area and the third storage area. This easily shortens the distance by which each transporter travels to transport articles into storage sites, as compared with the structure in which the Y-directional paths are not arranged between the second storage area and the first storage area and between the third storage area and the first storage area.

According to another preferred aspect of the present invention, in the structure in which the control system divides the target group into the plurality of subgroups, the Y-directional path may be a first Y-directional path, and the transporter may be a first transporter. The automated warehouse may further include a second Y-directional path disposed on the first side in the X-direction relative to the storage area and extending in the Y-direction, and a second transporter that transports the plurality of articles along the second Y-directional path and into and out of a storage row among the plurality of storage rows in the storage area. The control system may cause one of the first transporter or the second transporter to transport the articles included in at least one subgroup of the plurality of subgroups, and cause the other of the first transporter or the second transporter to transport the articles included in a subgroup other than the at least one subgroup among the plurality of subgroup.

This structure reduces the number of times each of the first transporter and the second transporter transports articles. The articles can thus be transported into the storage rows in a shorter time than when the first transporter or the second transporter transports all the articles included in the target group.

Further features and advantageous effects of the technique according to one or more embodiments of the present invention will be apparent from exemplary and nonlimiting embodiments described below with reference to the drawings, wherein:
- Fig. 1: is a schematic plan view of an automated warehouse according to an embodiment;
- Fig. 2: is a diagram illustrating an assignment process in a first example;
- Fig. 3: is a diagram illustrating an assignment process in a second example;
- Fig. 4: is a diagram illustrating an article receipt process in a first example;
- Fig. 5: is a diagram illustrating an article receipt process in a second example; and
- Fig. 6: is a schematic side view of another example of the automated warehouse.

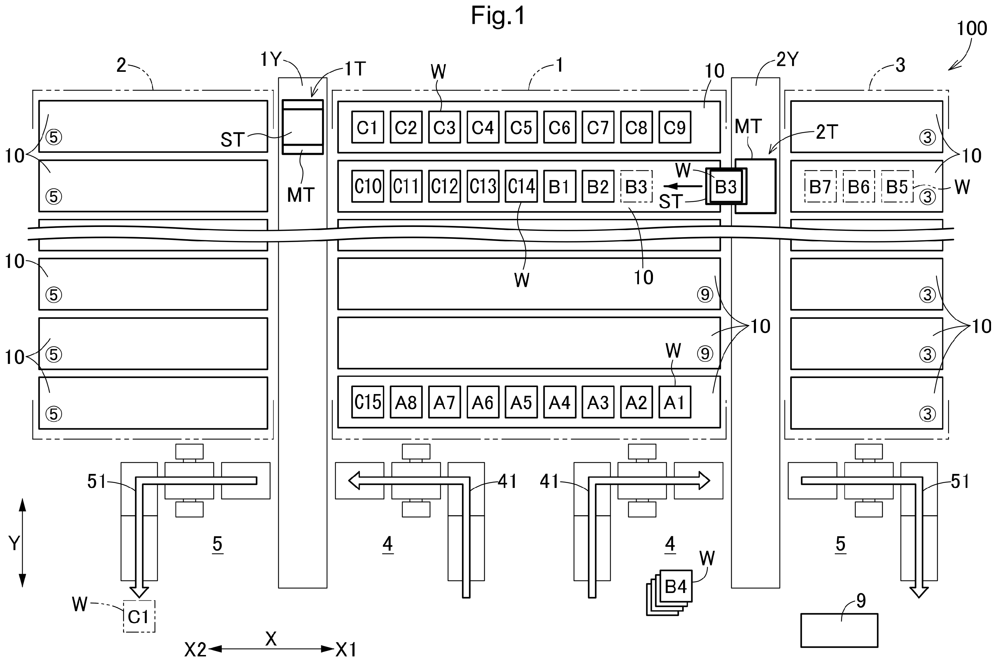

An automated warehouse 100 according to an embodiment of the present invention will now be described with reference to Fig. 1.

As shown in Fig. 1, the automated warehouse 100 is used for storing multiple articles W. Articles W transported into the automated warehouse 100 are transported to predetermined storage sites within the automated warehouse 100 for storage, without manual intervention of operators. Articles W stored in the automated warehouse 100 are automatically transported to predetermined issuing sites outside the automated warehouse 100, without manual intervention of operators.

The above movement of articles W relative to the automated warehouse 100 is herein described using article receipt and article issue. Article receipt includes transporting articles W into storage sites within the automated warehouse 100. Article issue includes transporting articles W stored in the automated warehouse 100 out of the automated warehouse 100.

The automated warehouse 100 stores multiple types of articles W. Although the articles W may have any appearance, the articles W in the present embodiment are loaded boxes. Each figure shows the articles W without distinguishing loads and boxes. The types of articles W are distinguished by, for example, the product name, the lot, the expiration date, and other characteristics. The automated warehouse 100 according to the present embodiment sets the storage site for an article W to be received to minimize the number of times the article W is moved within the automated warehouse 100. In the examples in Figs. 1 to 3, three types of articles W are stored in the automated warehouse 100. For ease of explanation, the three types of articles W are referred to as first articles, second articles, and third articles.

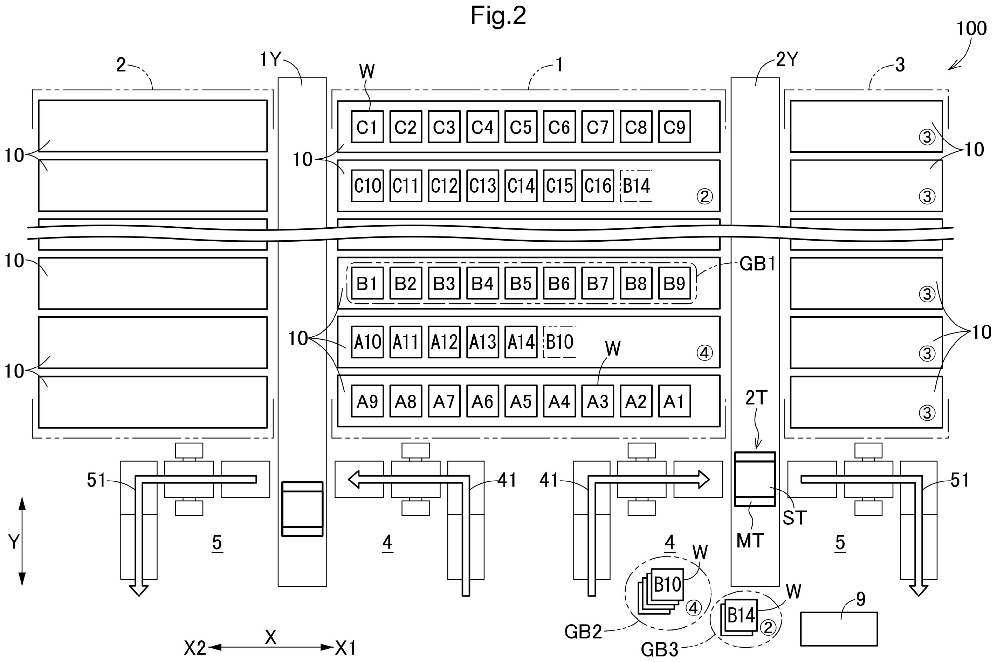

In Fig. 1, the first articles are each marked with letter A in the frame representing the article W. The second articles are each marked with letter B in the frame representing the article W. The third articles are each marked with letter C in the frame representing the article W. Figs. 2 to 4 also show the first articles, the second articles, and the third articles in the same manner as Fig. 1. In Figs. 1 to 4, each frame representing the article W also includes a number, in addition to the letter representing the type of the article W. The number indicates the order in which the article W has been transported into the storage site among the articles W of the same type. For example, each article W marked with number 1 in the frame is the article W transported into the storage site first among the articles W of the same type. Each article W marked with number 2 in the frame is the article W transported into the storage site second (after the article W marked with number 1 in the frame) among the articles W of the same type.

The structure of the automated warehouse 100 will be described below with reference to Fig. 1.

Two directions perpendicular to each other are herein referred to as an X-direction and a Y-direction to describe the positional relationships between components. The X-direction and the Y-direction are indicated by arrows with letters X and Y in each figure. In Fig. 1, the X-direction extends along a horizontal plane. In Fig. 1, the Y-direction extends along the horizontal plane and perpendicular to the X-direction. Each of the X-direction and the Y-direction may extend along a plane inclined in the vertical direction with respect to the horizontal plane. A first side in the X-direction is herein referred to as a first side X1 in the X-direction, and a second side opposite to the first side X1 in the X-direction is referred to as a second side X2 in the X-direction.

The automated warehouse 100 typically includes multiple layers arranged in the vertical direction. Fig. 1 shows an example of a specific layer in the automated warehouse 100 including the multiple layers. Examples of the layers in the automated warehouse 100 include imaginary planes defined at different specific positions (heights) in the vertical direction and floor surfaces defining the layers of a multilayer building. The automated warehouse 100 according to the present embodiment includes multiple columns and structural members joined to one another. Each layer extends along an imaginary plane defined at each specific position in the vertical direction.

The automated warehouse 100 includes a first Y-directional path 1Y extending in the Y-direction, a first storage area 1 disposed on the first side X1 in the X-direction relative to the first Y-directional path 1Y, a first transporter 1T that transports at least one article W along the first Y-directional path 1Y, and a control system 9. The control system 9 controls at least the first transporter 1T. In the present embodiment, the first Y-directional path 1Y corresponds to a Y-directional path, the first storage area 1 corresponds to a storage area, and the first transporter 1T corresponds to a transporter. In the present embodiment, the automated warehouse 100 further includes receiving areas 4 for receiving articles W and issuing areas 5 for issuing articles W.

Each receiving area 4 includes a receiving device 41 for receiving articles W placed outside the automated warehouse 100 into the first storage area 1. The receiving device 41 receives articles W to be received into the storage area from an operating entity outside the automated warehouse 100 (hereafter, an operating entity), and transfers the articles W to the first transporter 1T. The receiving device 41 includes, for example, a conveyor belt, a roller conveyor, another conveyor device, a lifting transport device that transports articles W across different layers, a picking station, or a combination of these. The conveyor device included in the receiving device 41 transports articles W received from the operating entity directly or indirectly through another device to a position at which the articles W are transferred to the first transporter 1T. The lifting transport device included in the receiving device 41 raises or lowers articles W received from the operating entity directly or indirectly through another device to transport the articles W to a position at which the articles W are transferred to the first transporter 1T on the layer to receive the articles W. The lifting transport device is, for example, a lifter. The picking station included in the receiving device 41 is a station at which an operator or a robot picks an intended article W from multiple articles W received from the operating entity and transfers the picked article W to the first transporter 1T directly or indirectly through another device. Examples of the operating entity include an operator and a robot that transfer articles W to the receiving device 41.

The receiving areas 4 illustrated in Fig. 1 are arranged adjacent to the first Y-directional path 1Y on the first side X1 in the X-direction. The receiving areas 4 are on a first side in the Y-direction (downward on the page in the example in Fig. 1) relative to the first storage area 1. Although not described in detail, the conveyor device and the lifting transport device are disposed in each receiving area 4 illustrated in Fig. 1.

Each issuing area 5 includes an issuing device 51 for issuing articles W stored in the automated warehouse 100. The issuing device 51 transfers articles W to be issued from the storage site including the first storage area 1 to an operating entity outside the automated warehouse 100. The issuing device 51 includes, for example, a conveyor device, a lifting transport device, a picking station, and a combination of these, similarly to the receiving device 41. The conveyor device included in the issuing device 51 transfers articles W received from the first transporter 1T directly or indirectly through another device to a position at which the articles W are transferred to the operating entity. The lifting transport device included in the issuing device 51 raises or lowers articles W received from the first transporter 1T directly or indirectly through another device to transport the articles W to a position at which the articles W are transferred to an operating entity on the layer from which the articles W are issued. The picking station included in the issuing device 51 is a station at which an operator or a robot picks an intended article W from multiple articles W received from the first transporter 1T directly or indirectly through another device and transfers the picked article W to the operating entity. Examples of the operating entity that receives articles W to be issued from the automated warehouse 100 include an operator and a robot, similarly to the operating entity that transports articles W to be received into the automated warehouse 100.

One of the issuing areas 5 illustrated in Fig. 1 is disposed adjacent to the first Y-directional path 1Y on the second side X2 in the X-direction. The issuing areas 5 are on the first side in the Y-direction (downward on the page in the example in Fig. 1) relative to the first storage area 1. Although not shown in detail, the conveyor device and the lifting transport device are disposed in each issuing area 5 illustrated in Fig. 1, similarly to the receiving area 4.

The first storage area 1 includes multiple storage rows 10 arranged in the Y-direction. Each of the multiple storage rows 10 includes storage sites that can store multiple articles W arranged in the X-direction. Each storage row 10 includes a support surface on which articles W can be placed. The support surface is a flat surface supported by posts or other structural members. The support surface has an area sized to receive multiple articles W in the X-direction. The size of the support surface is determined based on, for example, the weight of the articles W supported by the support surface and the structure of the structural members supporting the support surface. The storage rows 10 illustrated in Fig. 1 each have the support surface sized to receive nine articles W arranged in the X-direction. The support surface has a structure determined as appropriate based on, for example, the structure of the first transporter 1T. The support surface may support, for example, the entire lower surface of each article W. Such a support surface is in the form of a flat plate. The support surface may include, for example, multiple surfaces that support multiple portions of the lower surface of each article W. Examples of such a support surface include a pair of rails that support two portions of the lower surface of each article W at an interval in the width direction (the Y-direction in the example in Fig. 1). Although not shown in the figure, each storage row 10 in the present embodiment has the support surface including a pair of rails. The pair of rails are at an interval in the Y-direction shorter than the dimension of each article W in the Y-direction stored in the storage row 10. The pair of rails extend in the X-direction. The dimension of the rails in the X-direction is determined based on the number of articles W to be stored in the storage row 10. For example, the rails in each storage row 10 included in the first storage area 1 illustrated in Fig. 1 have a length that allows the storage row 10 to receive nine articles W arranged in the X-direction.

Each storage row 10 has opposite ends on the first side X1 in the X-direction and on the second side X2 in the X-direction through which articles W can be transported into and out of the storage row 10. More specifically, the storage row 10 has, across its opposite ends, a passage through which articles W can pass. In the present embodiment, each storage row 10 has the passage through which a part of the first transporter 1T holding an article W can move into the storage row 10, move inside the storage row 10, and move out of the storage row 10 as described in detail later.

The first Y-directional path 1Y is disposed in the automated warehouse 100 to pass through the positions at which articles W are transferred between each storage row 10 and the first transporter 1T, the position at which articles W are transferred between one of the receiving devices 41 and the first transporter 1T, and the position at which articles W are transferred between one of the issuing devices 51 and the first transporter 1T. The first Y-directional path 1Y is thus adjacent to the first storage area 1 on the second side X2 in the X-direction. The first transporter 1T moves on the first Y-directional path 1Y to transport articles W between the storage rows 10, the receiving device 41, and the issuing device 51. The first Y-directional path 1Y includes, for example, rails that guide a transport vehicle (a first transport vehicle MT described later) included in the first transporter 1T in the present embodiment.

The first transporter 1T can transport an article W into and out of any storage row 10. For example, the first transporter 1T includes a conveyor that transports an article W or the transport vehicle that moves to transport an article W. In the present embodiment, the first transporter 1T moves along the first Y-directional path 1Y to transport an article W. The first transporter 1T moves to a position adjacent to a storage row 10 in the X-direction on the first Y-directional path 1Y, and transports an article W into and out of the storage row 10 at the position.

In the present embodiment, the first transporter 1T includes the first transport vehicle MT that travels along the first Y-directional path 1Y and a second transport vehicle ST that travels inside the storage rows 10. The first transport vehicle MT can receive the second transport vehicle ST. The first transport vehicle MT travels on the first Y-directional path 1Y with the second transport vehicle ST mounted on the first transport vehicle MT. In other words, the first transporter 1T is a carrier with a shuttle including the first transport vehicle MT as a carrier and the second transport vehicle ST as a shuttle in the present embodiment.

The first transport vehicle MT includes a dolly including a mount surface on which the second transport vehicle ST is mountable. The dolly includes wheels (not shown) that can roll on the rails included in the first Y-directional path 1Y. The first transport vehicle MT travels on the first Y-directional path 1Y by rotating some or all of the wheels with a drive such as an electric motor. Although not described in detail, the position of the first transport vehicle MT on the first Y-directional path 1Y is indicated by detection information obtained by a detector (e.g., an encoder that detects rotation of the wheels included in the first transport vehicle MT or a distance sensor that detects the distance to a target object) (not shown). The control system 9 controls the first transport vehicle MT based on the detection information received from the detector.

The second transport vehicle ST is mountable on and separable from the first transport vehicle MT in the X-direction. More specifically, the first transport vehicle MT has no member that restricts the second transport vehicle ST from moving in the X-direction on its top. The second transport vehicle ST can thus move into a storage row 10 when transported to a position adjacent to the storage row 10 in the X-direction by the first transport vehicle MT. The second transport vehicle ST traveling inside a storage row 10 can move onto the first transport vehicle MT being at a position adjacent to the storage row 10 in the X-direction.

The second transport vehicle ST travels below the articles W stored in each storage row 10 along the storage row 10 to transport an article W. In the present embodiment, each storage row 10 includes, under the support surface including the pair of rails, a travel surface (not shown) on which the second transport vehicle ST can travel. The travel surface is disposed in the space occupied by the storage row 10 at an interval equal to about the height of the second transport vehicle ST from the support surface. To allow the second transport vehicle ST mounted on the first transport vehicle MT to move between the travel surface and the mount surface of the first transport vehicle MT, the travel surface extends in the X-direction at substantially the same level as the mount surface of the first transport vehicle MT.

The second transport vehicle ST includes a dolly including a lift that can raise and lower an article W placed on the second transport vehicle ST. The lift in the dolly passes through between the pair of rails included in the support surface. When transporting an article W into a predetermined storage site in a storage row 10, the second transport vehicle ST holding the article W enters the space below the support surface of the storage row 10 while holding the article W above the support surface, and moves to the position below the target storage site. The second transport vehicle ST then places the article W on the support surface of the storage row 10, lowers the lift to a position at which the lift is apart from the article W, and returns to the first transport vehicle MT. When transporting out an article W stored in a storage row 10, the second transport vehicle ST holding no article W moves to the space below the article W stored in the storage row 10 and to be transported out of the storage row 10, with the lifter adjusted at a level at which the lifter does not come in contact with the articles W stored in the storage row 10. The second transport vehicle ST then raises, with the lift, the article W stored in the storage row 10 to a position at which the article W is slightly above the support surface, and returns to the first transport vehicle MT together with the article W.

Similarly to the first transport vehicle MT, the second transport vehicle ST travels by rotating, using a drive (not shown) such as an electric motor, some or all of the wheels included in the dolly in the second transport vehicle ST. The second transport vehicle ST operates the lift with a driving force of the drive. Although not described in detail, the position of the second transport vehicle ST in the X-direction is indicated by detection information obtained by a detector (e.g., an encoder that detects rotation of the wheels or a distance sensor that detects the distance to a target object) (not shown), in the same manner as for the first transport vehicle MT. The control system 9 controls the second transport vehicle ST based on the detection information received from the detector.

In the present embodiment, the automated warehouse 100 further includes a second Y-directional path 2Y and a second transporter 2T. The second Y-directional path 2Y is a path on which the second transporter 2T travels. In the present embodiment, the second transporter 2T has the same structure as the first transporter 1T. In other words, the second transporter 2T includes a first transport vehicle MT and a second transport vehicle ST similarly to the first transporter 1T.

The second Y-directional path 2Y is disposed on the first side X1 in the X-direction relative to the first storage area 1. More specifically, the second Y-directional path 2Y is adjacent to the first storage area 1 on the first side X1 in the X-direction. Similarly to the first Y-directional path 1Y, the second Y-directional path 2Y also extends in the Y-direction, and is disposed in the automated warehouse 100 to pass through the position at which articles W are transferred between the second transporter 2T and the corresponding receiving device 41 and the position at which articles W are transferred between the second transporter 2T and the corresponding issuing device 51. In the present embodiment, the second Y-directional path 2Y also includes rails similarly to the first Y-directional path 1Y.

The second transporter 2T moves along the second Y-directional path 2Y to transport an article W. The second transporter 2T can transport an article W into and out of any storage row 10 in the first storage area 1. The second transporter 2T moves on the second Y-directional path 2Y to transport articles W between the storage rows 10 included in the first storage area 1, the receiving device 41, and the issuing device 51.

In the present embodiment, the automated warehouse 100 further includes a second storage area 2 different from the first storage area 1. The second storage area 2 is disposed on the second side X2 in the X-direction relative to the first Y-directional path 1Y. The second storage area 2 includes multiple storage rows 10 arranged in the Y-direction similarly to the first storage area 1. The storage rows 10 in the first storage area 1 and the storage rows 10 in the second storage area 2 have different lengths in the X-direction. More specifically, the storage rows 10 in the second storage area 2 are shorter than the storage rows 10 in the first storage area 1 in the X-direction. In the example shown in Fig. 1, the storage rows 10 in the first storage area 1 each have an area sized to store nine articles W arranged in the X-direction, whereas the storage rows 10 in the second storage area 2 each have an area sized to store five articles W in the X-direction.

In the present embodiment, the automated warehouse 100 further includes a third storage area 3 different from the first storage area 1 and the second storage area 2. The third storage area 3 is disposed on the first side X1 in the X-direction relative to the second Y-directional path 2Y. The third storage area 3 includes multiple storage rows 10 arranged in the Y-direction. The storage rows 10 in the second storage area 2 and the storage rows 10 in the third storage area 3 have different lengths in the X-direction. In the present embodiment, the storage rows 10 in the third storage area 3 and the storage rows 10 in the first storage area 1 also have different lengths in the X-direction. More specifically, the storage rows 10 in the third storage area 3 are shorter than the storage rows 10 in the second storage area 2 in the X-direction. In the example shown in Fig. 1, the storage rows 10 in the second storage area 2 each have the area sized to store five articles W arranged in the X-direction, whereas the storage rows 10 in the third storage area 3 each have an area sized to store three articles W in the X-direction.

The control system 9 includes an arithmetic processor such as a microcomputer and peripheral circuits including a storage device such as a memory. The functions of the control system 9 are implemented by hardware such as the arithmetic processor and a program executed on the hardware cooperating with each other. The control system 9 may be implemented by a single device or multiple devices that can communicate with one another. For example, the control system 9 includes hardware mounted on each of the multiple transporters and hardware that can communicate with the hardware mounted on each transporter.

The processes performed by the control system 9 will now be described with reference to Figs. 1 to 3.

The control system 9 may autonomously perform all the processes described below or perform the processes as instructed by an operator. The setting, the reference, and other operations of the control system 9 may be performed before each process or may be performed sequentially during each process. A process performed on the second transporter 2T by the control system 9 is also performed on the first transporter 1T in the same manner, and a process performed on the first transporter 1T by the control system 9 is also performed on the second transporter 2T in the same manner.

The control system 9 performs an assignment process to assign, among the candidate storage sites in each of the multiple storage rows 10, a storage site as the transport destination of an article W to be transported into a storage row 10, an article receipt process, and an article issue process.

To perform the assignment process, the control system 9 manages multiple articles W to be stored in at least one of the first storage area 1, the second storage area 2, or the third storage area 3 in groups. The control system 9 divides the articles W into multiple groups autonomously or as instructed by the operator.

The control system 9 divides the multiple articles W into groups based on a predetermined rule. For example, the control system 9 divides the articles W into one or more groups using the types of the articles W, the issuing order of the articles W, the attribute assigned to each article W by the operator, and other attributes of the articles W as determination criteria. In the present embodiment, the control system 9 divides receipt-target articles W into groups by the type of article W. In the example shown in Fig. 1 in which three types of articles W are stored in the automated warehouse 100, the control system 9 divides the articles W into three groups, or specifically, a group A including the first articles, a group B including the second articles, and a group C including the third articles. The control system 9 then assigns, as the transport destination of the articles W included in each group, storage sites in the storage rows 10 in the first storage area 1, the second storage area 2, and the third storage area 3.

In the assignment process, a group of articles W that are to be transported into one of the first storage area 1, the second storage area 2, or the third storage area 3 is referred to as a target group for ease of explanation. The articles W included in the target group are referred to as target articles. The number of target articles included in the target group is referred to as a target-article number. In the example shown in Fig. 1, the second articles are the target articles that are to be transported into the first storage area 1, and the group B including the multiple second articles is the target group. In the example shown in Fig. 1, the target group includes seven second articles.

The control system 9 refers to the number (storable-article number) of articles W that can be stored in each storage row 10 into which articles W can be transported, and assigns one or more storage rows 10 that can store one or more articles W (specifically, storage rows 10 with a storable-article number greater than or equal to 1) as the transport destination of the articles W to be received. The control system 9 refers to the storable-article number of each storage row 10 using a storage device included in the control system 9 or an external storage device.

The storable-article number is the number of articles W that can be stored in the storage sites (empty sites) other than the storage sites in which articles W are already stored in each of the multiple storage rows 10. The storable-article number is determined based on the size of each storage row 10 and the number of articles W already stored in each storage row 10. In the example shown in Fig. 2, the storable-article numbers of some of the storage rows 10 are indicated by circled numbers in the frames representing the storage rows 10. For example, for the second storage row 10 from the bottom of the page in the first storage area 1, the storable-article number is four as indicated by circled number 4. This storage row 10 can store another four articles W.

When no article W is stored in a storage row 10, the storable-article number is equal to a maximum storable-article number. The maximum storable-article number is the upper limit of the number of articles W that can be stored in each storage row 10. In the example shown in Fig. 2, the maximum storable-article number of each storage row 10 in the third storage area 3 is three. In the example shown in Fig. 2, no article W is stored in the storage rows 10 in the third storage area 3. In this case, the storable-article number of each storage row 10 in the third storage area 3 is equal to the maximum storable-article number of the storage row 10, which is three. In other words, the storable-article number is obtained by subtracting the number N (N is a natural number) of articles W stored in each storage row 10 from the maximum storable-article number of the storage row 10.

When the target articles included in the target group are transported into one of the first storage area 1, the second storage area 2, or the third storage area 3 by a transporter, the control system 9 selects, as a transport destination of the target articles, a storage row 10 with a storable-article number greater than or equal to the target-article number and closest to the target-article number. In the specific example described below, the control system 9 performs the selection for eight first articles included in the group A to be received, as in Fig. 1. More specifically, when eight first articles included in the group A, which are stored in a storage row 10 in the first storage area 1 shown in Fig. 1, are to be received, the control system 9 defines the first articles as the target articles and the target-article number as eight. Among the storage rows 10 in each of the first storage area 1, the second storage area 2, and the third storage area 3, the storage row 10 in which one third article is stored in the first storage area 1 (the bottom storage row 10 on the page in the first storage area 1 shown in Fig. 1) has a storable-article number greater than or equal to the target-article number of the group A and closest to the target-article number. More specifically, the storable-article number of this storage row 10 is eight, which is equal to the target-article number of the group A. The control system 9 selects this storage row 10 as a transport destination of the target articles included in the group A. This structure allows all the target articles included in the target group to be stored in a single storage row 10, thus reducing the number of storage rows 10 for storing the target articles. The target group may be divided into multiple groups in advance based on an instruction provided to the control system 9 by the user, as with the second articles included in the group B shown in Fig. 1. In this case, the control system 9 selects a storage row 10 with a storage-article number closest to the target-article number of each group as a transport destination of the target articles. In the example shown in Fig. 1, the seven second articles included in the group B are divided into a group including four second articles and a group including three second articles. The control system 9 selects, as a transport destination of the four second articles, the storage row 10 in which five third articles are stored in the first storage area 1 (the second storage row 10 from the top of the page in the first storage area 1 shown in Fig. 1). The control system 9 also selects, as a transport destination of the three second articles, a storage row 10 with a storable-article number of three in the third storage area 3.

The control system 9 may select, as a transport destination of the target articles, a storage row 10 into which all the target articles in the target group can be transported and that includes fewest empty sites after the target articles are transported into the storage row 10. This selection is also described below with reference to Fig. 1 in which the control system 9 performs the selection for the eight first articles included in the group A to be received. In the example shown in Fig. 1, some of the multiple storage rows 10 in the first storage area 1 store no article W and are empty. The storable-article number of each of the empty storage rows 10 is nine. The empty storage rows 10 are thus also candidates for the transport destination of the eight first articles included in the group A. However, the control system 9 selects, as a transport destination of the target articles, the storage row 10 having a storable-article number of eight to include no empty site after the eight target articles are transported into the storage row 10. This structure reduces the number of empty sites in the storage row 10 into which the target articles have been transported. This allows efficient storage of multiple articles W in the storage rows 10.

In the article receipt process, the control system 9 causes the first transporter 1T or the second transporter 2T to transport a receipt-target article W from the receiving area 4 to the storage site selected as a transport destination. More specifically, the control system 9 causes the first transporter 1T or the second transporter 2T to move to the position at which the receipt-targe article W is transferred from the receiving area 4 to the transporter. The control system 9 then causes the transporter to receive the receipt-target article W and transport the article W to the selected storage site. In the example shown in Fig. 1, the second transporter 2T transports the second articles into storage rows 10 along the second Y-directional path 2Y. In the example shown in Fig. 1, the second transport vehicle ST mounted on the first transport vehicle MT in the second transporter 2T receives receipt-targe articles W (the second articles in the example shown in Fig. 1), and transports the articles W to their transport destination. The second transport vehicle ST is moved, by the first transport vehicle MT, to a position adjacent to the storage row 10 including the storage site selected as a transport destination in the X-direction, and then enters the storage row 10 to transport an article W to the storage site. When transporting multiple articles W into the same storage row 10, the second transport vehicle ST sequentially transports the articles W into the storage row 10, starting from the storage site on the far side from the first transport vehicle MT in the X-direction. In the example shown in Fig. 1, the second transport vehicle ST transports the seven second articles into a storage row 10 in the first storage area 1 and a storage row 10 in the third storage area 3. More specifically, in Fig. 1, the second transport vehicle ST included in the second transporter 2T transports, of the seven second articles, the second article that is transported into the storage row 10 third.

In the article issue process, the control system 9 causes the first transporter 1T or the second transporter 2T to transport an issue-target article W out of a storage row 10. More specifically, the control system 9 causes the first transporter 1T or the second transporter 2T to move to the storage site. The control system 9 then causes the transporter to receive the issue-target article W and transport the article W to the issuing area 5. In the example shown in Fig. 1, the third articles are issued from the storage rows 10 by the first transporter 1T along the first Y-directional path 1Y. In the example shown in Fig. 1, the second transport vehicle ST mounted on the first transport vehicle MT in the first transporter 1T receives issue-target articles W (the third articles in the example shown in Fig. 1), and transports the articles W to the issuing area 5 while being mounted on the first transport vehicle MT. The second transport vehicle ST is moved, by the first transport vehicle MT, to a position adjacent to the storage row 10 including the storage site selected as a transport destination in the X-direction. The second transport vehicle ST then enters the storage row 10, receives the article W, and transports the article W out of the storage row 10. When transporting multiple articles W out of the same storage row 10, the second transport vehicle ST sequentially transports the articles W out of the storage row 10, starting from the storage site on the near side to the first transport vehicle MT in the X-direction. In the example shown in Fig. 1, the second transport vehicle ST transports one third article from a storage row 10 in the first storage area 1. More specifically, in Fig. 1, the second transport vehicle ST included in the first transporter 1T transports the third article that has been transported into the storage row 10 first.

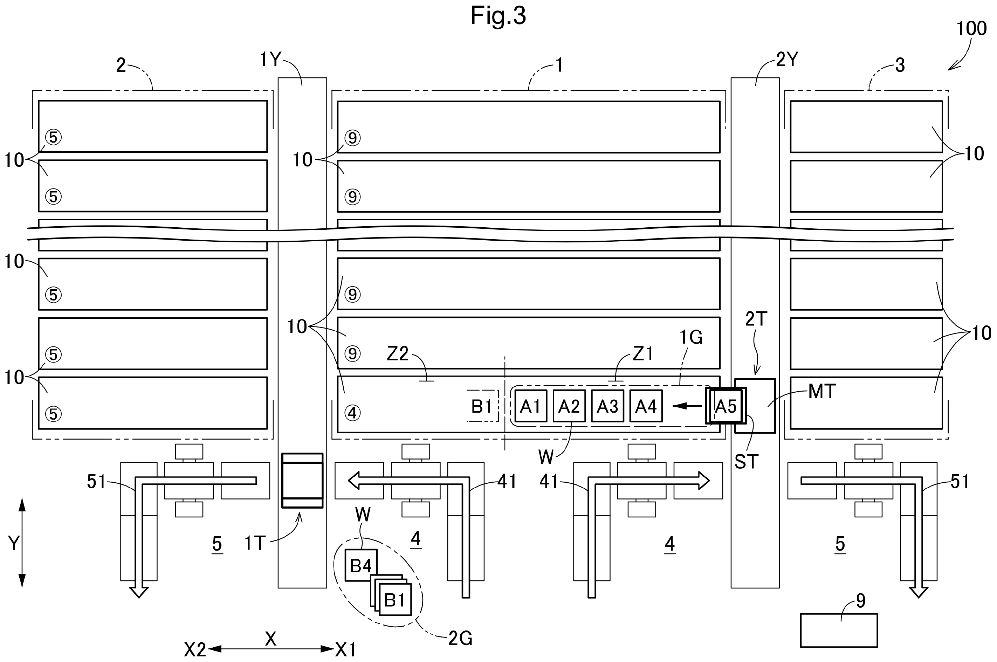

In the above processes performed by the control system 9 to cause the first transporter 1T and the second transporter 2T to perform article receipt and article issue, the assignment process may include a subgrouping process shown in Fig. 2 or a partitioning process shown in Fig. 3.

The subgrouping process is a process of dividing the target group into multiple subgroups in response to the target-article number being greater than the maximum storable-article number as shown in Fig. 2. The maximum storable-article number is the storable-article number of a storage row 10 with the greatest storable-article number among the multiple storage rows 10. For example, when one or more of the storage rows 10 in the first storage area 1 are empty, the maximum storable-article number is nine. For ease of explanation, the first storage area 1 shown in Fig. 2 alone will be described. All the storage rows 10 in the first storage area 1 store articles W, with one of the storage rows 10 (a storage row 10 above the break line on the page) having a storable-article number of two and another of the storage rows 10 (a storage row 10 below the break line on the page) having a storable-article number of four. In this case, the maximum storable-article number is four. The second storage area 2 and the third storage area 3 will also be described in addition to the first storage area 1 shown in Fig. 1. The second storage area 2 includes empty storage rows 10, and thus the actual maximum storable-article number is five in the example shown in Fig. 1. In the subgrouping process described below, the storage sites in the storage rows 10 in the first storage area 1 and the third storage area 3, excluding the second storage area 2, are candidates for a transport destination selected by the control system 9 for ease of explanation.

The control system 9 determines the number of articles included in each subgroup to allow all the articles W included in one subgroup to be transported into one storage row 10. The number of subgroups may be two. When the target group is divided into two subgroups and none of the storage rows 10 can store all the articles W included in each subgroup, the target group may be divided into three or more subgroups, or into fewest possible subgroups. This structure allows the articles W included in the target group to be stored in storage sites relatively close to one another. In Fig. 2, the target-article number is 15, and the second articles are received as the target articles. In other words, the second articles included in the group B are received in the example in Fig. 2. Among the storage rows 10 in the first storage area 1 and the third storage area 3, an empty storage row 10 in the first storage area 1 has the maximum storable-article number, which is nine. The storable-article numbers of the other storage rows 10 are two, three, or four. Thus, none of the storage rows 10 can store all the 15 second articles. When the 15 second articles are divided into two subgroups, for example, a subgroup article number that is the number of articles W included in a first subgroup is nine, and the subgroup article number of a second subgroup is six. In the example shown in Fig. 2, with no storage row 10 into which all the six second articles can be transported, the control system 9 divides the six second articles into another two subgroups. More specifically, in the example shown in Fig. 2, the control system 9 divides the group B into three subgroups, or specifically, a first subgroup GB1 including nine second articles, a second subgroup GB2 including four second articles, and a third subgroup GB3 including two second articles.

The control system 9 selects a storage row 10 with the maximum storable-article number as a transport destination of the articles W included in a specific subgroup, and selects other storage rows 10 as a transport destination of the articles W included in each subgroup other than the specific subgroup. In the example shown in Fig. 2, the specific subgroup corresponds to the first subgroup GB1. The subgroup article number of the first subgroup GB1, which is nine, is equal to the maximum storable-article number, which is nine, before the second articles in Fig. 2 are transported into a storage row 10 in the first storage area 1. The control system 9 thus selects, as a transport destination of the first subgroup GB1, an empty storage row 10 (the storage row 10 below the double break line below in the middle of the page) in the first storage area 1.

The control system 9 sets the subgroup article numbers of the subgroups other than the specific subgroup to minimize the number of empty sites in the storage rows 10 after the articles in the subgroups other than the specific subgroup are transported into the storage rows 10. This structure reduces the number of empty sites in each storage row 10, thus allowing efficient storage of the articles W in each storage row 10. In the example shown in Fig. 2, the storable-article numbers of the storage rows 10 selectable as a transport destination of each subgroup other than the first subgroup GB1 are the storable-article numbers of the two storage rows 10 in the first storage area 1 and the storage rows 10 in the third storage area 3. The storable-article number of one of the two storage rows 10 in the first storage area 1 is two, the storable-article number of the other of the two storage rows 10 in the first storage area 1 is four, and the storable-article number of each storage row 10 in the third storage area 3 is three. The control system 9 thus divides the six second articles into the second subgroup GB2 including four second articles and the third subgroup GB3 including two second articles, rather than dividing the six second articles into two subgroups each including three second articles. Thus, the storage row 10 with a storable-article number of four in the first storage area 1 can be selected as a transport destination of the second articles in the second subgroup GB2, and the storage row 10 with a storable-article number of two in the first storage area 1 can be selected as a transport destination of the second articles in the third subgroup GB3.

As shown in Fig. 3, the partitioning process is a process of dividing a storage row 10 into multiple zones and selecting each zone as a transport destination of multiple articles W divided into groups.

One of the groups of articles W is referred to as a first group 1G, and another group different from the first group 1G is referred to as a second group 2G. In the example shown in Fig. 3, the first group 1G includes the first articles, and the second group 2G includes the second articles. The first group 1G includes five first articles. The second group 2G includes four second articles.

The control system 9 divides an area including a storage row 10 into a first zone Z1 and a second zone Z2. The first zone Z1 includes an end on the first side X1 in the X-direction of the storage row 10. The second zone Z2 is disposed on the second side X2 in the X-direction relative to the first zone Z1 in the storage row 10. The control system 9 selects the first zone Z1 as a transport destination of the articles W included in the first group 1G. The control system 9 selects the second zone Z2 as a transport destination of the articles W included in the second group 2G.

The control system 9 defines the position of the boundary between the first zone Z1 and the second zone Z2 to allow all the articles W to be transported into each zone to be transported into the zone. In the example shown in Fig. 3, an empty storage row 10 in the first storage area 1 is divided into the first zone Z1 and the second zone Z2, the articles W included in the first group 1G are transported into the first zone Z1, and the articles W included in the second group 2G are transported into the second zone Z2. The number of first articles included in the first group 1G is five, and the number of second articles included in the second group 2G is four. The control system 9 thus defines the boundary between the first zone Z1 and the second zone Z2 at a position that allocates five storage sites from the end of the storage row 10 on the first side X1 in the X-direction.

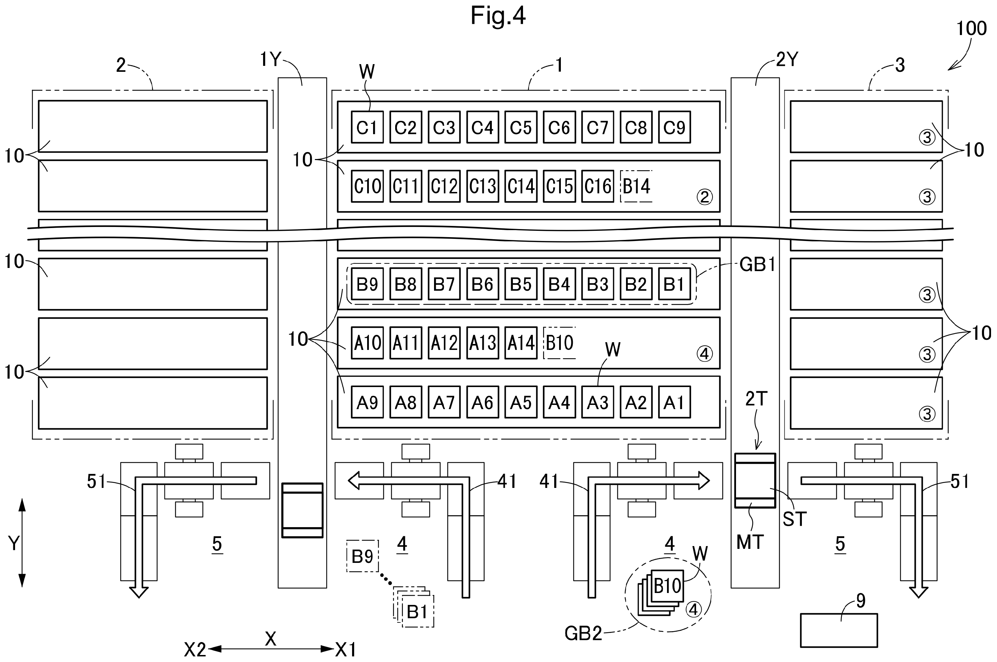

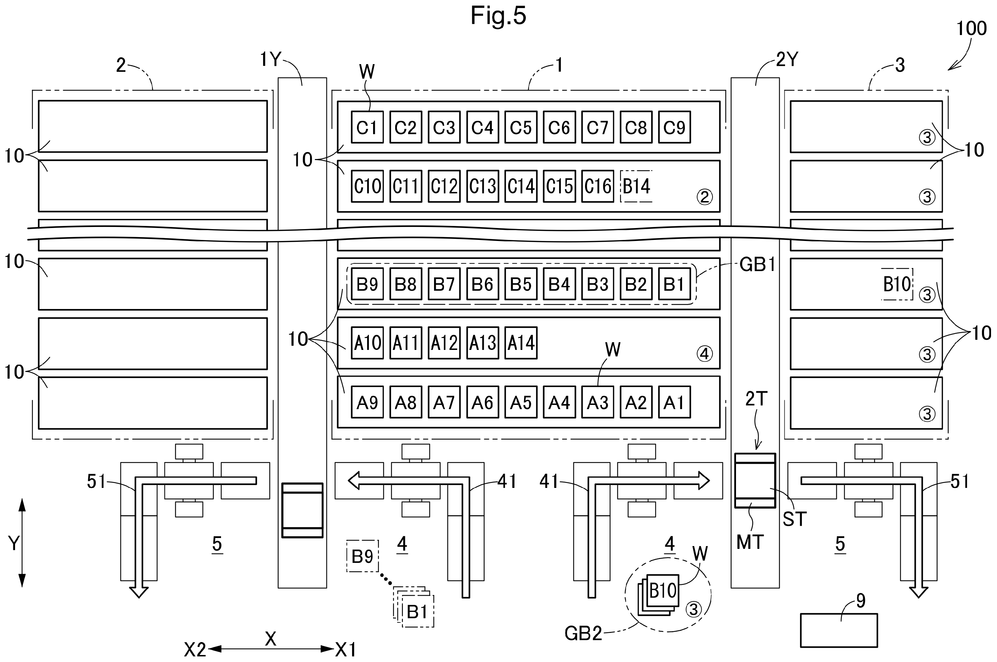

Through the assignment process described above, the sites into which the first transporter 1T and the second transporter 2T can transport multiple articles W in a shared manner may be assigned as the transport destination of the multiple articles W as shown in Fig. 4 or 5. In this case, the control system 9 may distribute the transport of multiple receipt-target articles W between both the first transporter 1T and the second transporter 2T. This structure reduces the number of times each of the first transporter 1T and the second transporter 2T transports articles W to receive all the receipt-target articles W. All the receipt-target articles W can thus be received in a shorter time than when the first transporter 1T or the second transporter 2T transports all the receipt-target articles W.

In the article receipt process after the subgrouping process is performed, in particular, the control system 9 may cause one of the first transporter 1T or the second transporter 2T to transport the articles W included in at least one of the multiple subgroups, and cause the other of the first transporter 1T or the second transporter 2T to transport the articles W included in the rest of the subgroups. When the target-article number of the target group is greater than the maximum storable-article number of the storage rows 10, this structure can leave the greatest possible number of storage rows 10 storing no article W and also allows all the receipt-target articles W to be transported into the storage rows 10 each assigned as a transport destination in a short time.

In the example shown in Fig. 4, the second articles included in the group B are the target articles as in the example shown in Fig. 2, and the control system 9 performs the article receipt process. In the example shown in Fig. 4, the number of second articles included in the group B is 13 for ease of explanation, and is different from the number of second articles included in the group B, which is 15, in the example shown in Fig. 2. In the example shown in Fig. 4, the control system 9 divides the second articles included in the group B into a first subgroup GB1 including nine second articles and a second subgroup GB2 including four second articles. The control system 9 then assigns storage rows 10 in the first storage area 1 as the transport destination of all the second articles included in the group B. In the article receipt process after the transport destination is assigned as described above, the control system 9 causes the first transporter 1T to transport the second articles included in the first subgroup GB1 and the second transporter 2T to transport the second articles included in the second subgroup GB2.

In the example shown in Fig. 4, the storage rows 10 in the first storage area 1 are assigned as the transport destination of the articles W included in the target group. However, the storage rows 10 in the areas other than the first storage area 1 may also be assigned as the transport destination of the articles W included in the target group as shown in Fig. 5. For example, storage rows 10 in at least two of the first storage area 1, the second storage area 2, or the third storage area 3 may be assigned as the transport destination of the articles W included in the target group as shown in Fig. 5. In the example shown in Fig. 5, the second articles included in the group B are the target articles as in the example shown in Fig. 4, and the control system 9 performs the article receipt process. In the example shown in Fig. 5, the number of second articles included in the group B is 12 for ease of explanation, and is different from the number of second articles included in the group B, which is 13, in the example shown in Fig. 4.

In the example shown in Fig. 5, the control system 9 divides the second articles included in the group B into a first subgroup GB1 including nine second articles and a second subgroup GB2 including three second articles. The control system 9 then assigns a storage row 10 in the first storage area 1 as the transport destination of the second articles included in the first subgroup GB1, and a storage row 10 in the third storage area 3 as the transport destination of the second articles included in the second subgroup GB2. In the article receipt process after the transport destinations are assigned as described above, the control system 9 selects the second articles transported by the first transporter 1T and the second articles transported by the second transporter 2T to allow each of the first transporter 1T and the second transporter 2T to transport the second articles included in the first subgroup GB1 or the second subgroup GB2 to the corresponding transport destination assigned for the second articles included in the first subgroup GB1 or the second subgroup GB2. In the example shown in Fig. 5, the second transporter 2T alone can transport articles W into the storage rows 10 in the third storage area 3. The control system 9 thus causes the first transporter 1T to transport the second articles included the first subgroup GB1 and the second transporter 2T to transport the second articles included in the second subgroup GB2.

An automated warehouse 100 according to other embodiments of the present invention will now be described.

In the above embodiment, each receiving area 4 and each issuing area 5 are disposed at different locations. However, the receiving area 4 and the issuing area 5 may at least partially overlap each other. The first transporter 1T and the second transporter 2T may use the same receiving area 4 or the same issuing area 5 to transfer articles W.

In the above embodiment, the second transport vehicle ST, which transports articles W into or out of a storage row 10, sequentially transports the articles W into the storage row 10, starting from the storage site on the far side from the first transport vehicle MT in the X-direction, and sequentially transports the articles W out of the storage row 10, starting from the storage site on the near side to the first transport vehicle MT in the X-direction. However, the second transport vehicle ST may start from the storage site on the near side in the X-direction to sequentially transport the articles W into the storage row 10, and start from the storage site on the far side in the X-direction to sequentially transport the articles W out of the storage row 10. The second transport vehicle ST may transport the articles W into or out of storage sites in any sequence.

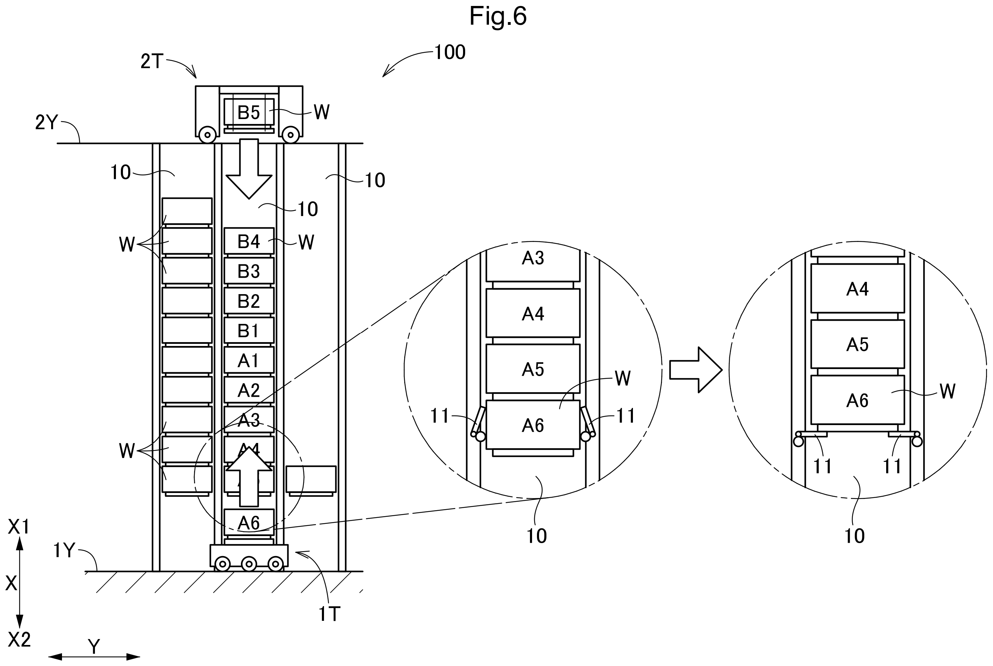

In the above embodiment, both the X-direction and the Y-direction extend along the horizontal plane. However, the X-direction and the Y-direction may not extend along the horizontal plane. One of the X-direction or the Y-direction may extend along the vertical direction as shown in Fig. 6. Fig. 6 shows an example of the automated warehouse 100 when the X-direction extends along the vertical direction and the Y-direction extends along the horizontal plane. For the storage rows 10 in this case, articles W are stacked in the vertical direction. For example, multiple articles W are stacked in the vertical direction in each storage row 10, as in the enlarged view in the middle of the page in Fig. 6. Each storage row 10 includes, for example, a pair of guide rails that guide multiple articles W in the vertical direction and holders 11 that hold the lowermost article W. In the example shown in Fig. 6, the holders 11 are a pair of hinges including leaves that are urged to be parallel to the horizontal plane when not receiving a load. For example, the pair of hinges have the leaves on the pair of guide rails to restrict downward movement of an article W. When an article W moves upward from below the leaves, the leaves pivot upward about their joints with the guide rails, allowing the article W to move upward. In this example, the first Y-directional path 1Y is, for example, a floor surface. The first transporter 1T is a lifting transport vehicle that travels on the floor surface and raises and lowers an article W in the vertical direction. The second Y-directional path 2Y is a dolly that travels along the surface of a layer above the floor surface and includes a suspending transferrer to raise and lower a suspended article W in the vertical direction.

In the above embodiment, the first transporter 1T and the second transporter 2T each include the first transport vehicle MT and the second transport vehicle ST. However, at least one of the first transporter 1T or the second transporter 2T may be a stacker crane that can transport articles W into the storage rows 10 or a stacker crane that can transport a shuttle that can enter the storage rows 10. At least one of the first transporter 1T or the second transporter 2T may be a dolly movable in both the X-direction and the Y-direction. In this case, at least one of the first transporter 1T or the second transporter 2T can enter the storage rows 10. In this case, at least one of the first transporter 1T or the second transporter 2T may move inside each storage row 10 by, for example, passing through the space under the articles W stored in the storage row 10 to avoid collision with the articles W stored in the storage row 10. Each storage row 10 may include a conveyor that moves articles W in the X-direction, and at least one of the first transporter 1T or the second transporter 2T may be a transport vehicle that moves an article W in the Y-direction.

In the above embodiment, the first transporter 1T and the second transporter 2T transport the respective two subgroups in the article receipt process after the subgrouping process is performed, as shown in Fig. 4. However, the articles W in the target group may be divided into three or more subgroups in the subgrouping process. In this case, the control system 9 may cause one of the first transporter 1T or the second transporter 2T to transport the articles W included in one or more subgroups, and the other of the first transporter 1T or the second transporter 2T to transport the articles W included in the rest of the subgroups.

The structure described in each of the above embodiments of the present invention may be combined with any other structures described in other embodiments of the present invention unless any contradiction arises. For other structures as well, the embodiments described herein are merely illustrative in all aspects. Thus, the embodiments described herein may be modified variously as appropriate without departing from the spirit and scope of the disclosure.

An overview of the automated warehouse according to the embodiments of the present invention described above is provided below.

An automated warehouse includes a Y-directional path extending in a Y-direction and a storage area disposed on a first side in an X-direction relative to the Y-directional path. The X-direction is perpendicular to the Y-direction. The storage area includes a plurality of storage rows arranged in the Y-direction. Each of the plurality of storage rows includes storage sites to store a plurality of articles as arranged in the X-direction. The automated warehouse includes a transporter that transports at least one article along the Y-directional path and into and out of a storage row among the plurality of storage rows, and a control system that controls the transporter. The control system manages the plurality of articles to be stored in the storage area in groups. The groups of articles include a target group to be transported into the storage area. The target group includes target articles. To transport the target articles included in the target group into the storage area using the transporter, the control system selects, among the plurality of storage rows, a storage row with a storable-article number greater than or equal to a target-article number and closest to the target-article number as a transport destination of the target articles. The target-article number is a number of target articles included in the target group. The storable-article number is a number of articles storable in, among the storage sites in each of the plurality of storage rows, storage sites other than storage sites in which articles are stored.

In this structure, articles included in the same group are highly likely to be stored in the same storage row. When the articles are transported out of the storage rows by the groups, this easily reduces the number of transport operations for articles, other than the articles to be transported out of the storage row, that are arranged on the side adjacent to the Y-directional path relative to the articles to be transported out of the storage row. This structure can also leave a maximum possible number of storage rows storing no article, thus increasing the likelihood that articles included in each group can be stored in the same storage row in storing the articles included in each group. This structure easily shortens the transport path to transport the multiple articles in the same group within the automated warehouse, as compared with when the multiple articles included in the same group are stored into multiple storage rows in a distributed manner. The article transportation efficiency can thus be improved easily.

The control system may divide the target group into a plurality of subgroups in response to the target-article number being greater than a maximum storable-article number. The maximum storable-article number is the storable-article number of a storage row with a greatest storable-article number among the plurality of storage rows. The control system may cause a specific subgroup that is at least one of the plurality of subgroups to have a subgroup-article number equal to the maximum storable-article number. The subgroup-article number is a number of articles included in each of the plurality of subgroups. The control system may select a storage row with the maximum storable-article number among the plurality of storage rows as a transport destination of the articles included in the specific subgroup, and select, among the plurality of storage rows, a storage row other than the storage row with the maximum storable-article number as a transport destination of the articles included in a subgroup other than the specific subgroup among the plurality of subgroups.

When the target-article number of the target group is greater than the maximum storable-article number of the storage rows, this structure can leave a maximum possible number of storage rows storing no article. For a storage row in which articles are stored as well, this structure can leave a maximum possible number of storage sites other than the storage sites in which articles included in one group are stored. This increases the likelihood that articles included in each group can be stored in the same storage row in storing the articles included in each group.

The Y-directional path may be a first Y-directional path, and the transporter may be a first transporter. The automated warehouse may further include a second Y-directional path disposed on the first side in the X-direction relative to the storage area and extending in the Y-direction, and a second transporter that transports the plurality of articles along the second Y-directional path and into and out of a storage row among the plurality of storage rows in the storage area. The groups of articles may include a first group and a second group different from the first group. The control system may select a first zone as a transport destination of the articles included in the first group and select a second zone as a transport destination of the articles included in the second group. The first zone includes an end on the first side in the X-direction of a storage row among the plurality of storage rows. The second zone is disposed on a second side in the X-direction relative to the first zone in the storage row.

This structure allows both the first transporter and the second transporter to transport articles into the first storage area. This allows articles included in different groups to be stored in the first zone and the second zone of each storage row in the first storage area. This reduces the percentage of empty storage sites in each storage row, and also easily increases the likelihood that articles included in the same group can be stored in the same storage row. The articles in each group can be transported out of the storage row from both sides in the X-direction by the first transporter and the second transporter. When the articles are transported out of the storage rows by the groups, this easily reduces the number of transport operations for articles stored in the storage sites relatively far from the Y-directional path corresponding to the transporter that transports an article out of the storage row.

In the structure including the first Y-directional path and the second Y-directional path, the storage area may be a first storage area. The automated warehouse may further include a second storage area different from the first storage area. The second storage area may include a plurality of storage rows arranged in the Y-direction. The plurality of storage rows in the first storage area and the plurality of storage rows in the second storage area may have different lengths in the X-direction.

This structure easily increases the likelihood that a storage row with a storable-article number corresponding to the number of articles in each group can be selected when the numbers of articles in the groups are different. This increases the likelihood that articles included in each group can be stored in the same storage row in storing the articles included in each group.

In the structure including the second storage area, the second storage area may be disposed on the second side in the X-direction relative to the first Y-directional path. The automated warehouse may further include a third storage area disposed on the first side in the X-direction relative to the second Y-directional path. The third storage area may include a plurality of storage rows arranged in the Y-direction. The plurality of storage rows in the second storage area and the plurality of storage rows in the third storage area may have different lengths in the X-direction.

This structure includes the third storage area in addition to the first storage area and the second storage area. The storage rows in the third storage area and the storage rows in the second storage area have different lengths in the X-direction. When each group includes a different number of articles, this structure further increases the likelihood that storage rows with storable-article numbers corresponding to the number of articles in each group can be selected. This further increases the likelihood that articles included in each group can be stored in the same storage row in storing the articles included in each group. In this structure, the second storage area is disposed on the second side in the X-direction relative to the first storage area with the first Y-directional path between the first storage area and the second storage area, and the third storage area is disposed on the first side in the X-direction relative to the first storage area with the second Y-directional path between the first storage area and the third storage area. This easily shortens the distance by which each transporter travels to transport articles into storage sites, as compared with the structure in which the Y-directional paths are not arranged between the second storage area and the first storage area and between the third storage area and the first storage area.

In the structure in which the control system divides the target group into the plurality of subgroups, the Y-directional path may be a first Y-directional path, and the transporter may be a first transporter. The automated warehouse may further include a second Y-directional path disposed on the first side in the X-direction relative to the storage area and extending in the Y-direction, and a second transporter that transports the plurality of articles along the second Y-directional path and into and out of a storage row among the plurality of storage rows in the storage area. The control system may cause one of the first transporter or the second transporter to transport the articles included in at least one subgroup of the plurality of subgroups, and cause the other of the first transporter or the second transporter to transport the articles included in a subgroup other than the at least one subgroup among the plurality of subgroup.

This structure reduces the number of times each of the first transporter and the second transporter transports articles. The articles can thus be transported into the storage rows in a shorter time than when the first transporter or the second transporter transports all the articles included in the target group.

The transporter may include a first transport vehicle that travels along the Y-directional path and a second transport vehicle that travels below the plurality of articles stored in each of the plurality of storage rows along the storage row to transport an article. The first transport vehicle may receive the second transport vehicle.

This structure allows the first transport vehicle that travels along the Y-directional path to transport an article and the second transport vehicle to an intended position in the Y-direction, and also allows the second transport vehicle that travels along each storage row to transport the article to an intended position in the storage row in the X-direction. Thus, an article can be appropriately transported to an intended storage site in a storage row independently of the length of the storage row in the X-direction.

The technique according to one or more embodiments of the present invention is applicable to an automated warehouse including a storage area for storing multiple articles and a transporter that transports the articles within the storage area.

### REFERENCE SIGNS

- 1: (first) storage area
- 1G: first group
- 1T: (first) transporter
- 1Y: (first) Y-directional path
- 2: second storage area
- 2G: second group
- 2T: second transporter
- 2Y: second Y-directional path
- 3: third storage area
- 4: receiving area
- 5: issuing area
- 9: control system
- 10: storage row
- 11: holders
- 41: receiving device
- 51: issuing device
- 100: automated warehouse

- A1 to A14: first article
- B1 to B14: second article
- C1 to C16: third article
- GB1: (first) subgroup
- GB2: second subgroup
- GB3: third subgroup
- MT: first transport vehicle
- ST: second transport vehicle
- W: article
- X: X-direction
- X1: first side in X-direction
- X2: second side in X-direction
- Y: Y-direction
- Z1: first zone
- Z2: second zone

## Claims

1. An automated warehouse (100), **characterized by** comprising:
a Y-directional path (1Y) extending in a Y-direction (Y);
a storage area (1) disposed on a first side (X1) in an X-direction (X) relative to the Y-directional path (1Y), the X-direction (X) being perpendicular to the Y-direction (Y), the storage area (1) including a plurality of storage rows (10) arranged in the Y-direction (Y), each of the plurality of storage rows (10) including storage sites to store a plurality of articles (W) as arranged in the X-direction (X);
a transporter (1T) configured to transport at least one article (W) along the Y-directional path (1Y) and into and out of a storage row (10) among the plurality of storage rows (10); and
a control system (9) configured to control the transporter (1T),
the control system (9) being configured to manage the plurality of articles (W) to be stored in the storage area (1) in groups, the groups of articles (W) including a target group to be transported into the storage area (1), the target group including target articles (W),
to transport the target articles (W) included in the target group into the storage area (1) using the transporter (1T), the control system (9) being configured to select, among the plurality of storage rows (10), a storage row (10) with a storable-article number greater than or equal to a target-article number and closest to the target-article number as a transport destination of the target articles (W), the target-article number being a number of target articles (W) included in the target group, the storable-article number being a number of articles (W) storable in, among the storage sites in each of the plurality of storage rows (10), storage sites other than storage sites in which articles (W) are stored.

2. The automated warehouse (100) according to claim 1, wherein
the control system (9) divides the target group into a plurality of subgroups in response to the target-article number being greater than a maximum storable-article number, the maximum storable-article number being the storable-article number of a storage row (10) with a greatest storable-article number among the plurality of storage rows (10),
causes a specific subgroup (GB1) that is at least one of the plurality of subgroups to have a subgroup-article number equal to the maximum storable-article number, the subgroup-article number being a number of articles (W) included in each of the plurality of subgroups, and selects a storage row (10) with the maximum storable-article number among the plurality of storage rows (10) as a transport destination of the articles (W) included in the specific subgroup (GB1), and selects, among the plurality of storage rows (10), a storage row (10) other than the storage row (10) with the maximum storable-article number as a transport destination of the articles (W) included in a subgroup other than the specific subgroup (GB1) among the plurality of subgroups.

3. The automated warehouse according to claim 1 or 2, wherein
the Y-directional path (1Y) is a first Y-directional path (1Y), and the transporter (1T) is a first transporter (1T),
the automated warehouse (100) further comprises
a second Y-directional path (2Y) disposed on the first side (X1) in the X-direction (X) relative to the storage area (1) and extending in the Y-direction (Y), and
a second transporter (2T) configured to transport the plurality of articles (W) along the second Y-directional path (2Y) and into and out of a storage row (10) among the plurality of storage rows (10) in the storage area (1),
the groups of articles (W) include a first group (1G) and a second group (2G) different from the first group (1G), and
the control system (9) selects a first zone (Z1) as a transport destination of the articles (W) included in the first group (1G) and selects a second zone (Z2) as a transport destination of the articles (W) included in the second group (2G), the first zone (Z1) including an end on the first side (X1) in the X-direction of a storage row (10) among the plurality of storage rows (10), the second zone (Z2) being disposed on a second side (X2) in the X-direction (X) relative to the first zone (Z1) in the storage row (10).

4. The automated warehouse (100) according to claim 3, wherein
the storage area (1) is a first storage area (1),
the automated warehouse (100) further comprises a second storage area (2) different from the first storage area (1),
the second storage area (2) includes a plurality of storage rows (10) arranged in the Y-direction (Y), and
the plurality of storage rows (10) in the first storage area (1) and the plurality of storage rows (10) in the second storage area (2) have different lengths in the X-direction (X).

5. The automated warehouse (100) according to claim 4, wherein
the second storage area (2) is disposed on the second side (X2) in the X-direction (X) relative to the first Y-directional path (1Y),
the automated warehouse (100) further comprises a third storage area (3) disposed on the first side (X1) in the X-direction (X) relative to the second Y-directional path (2Y),
the third storage area (3) includes a plurality of storage rows (10) arranged in the Y-direction (Y), and
the plurality of storage rows (10) in the second storage area (2) and the plurality of storage rows (10) in the third storage area (3) have different lengths in the X-direction (X).

6. The automated warehouse (100) according to claim 2, wherein
the Y-directional path (1Y) is a first Y-directional path (1Y), and the transporter (1T) is a first transporter (1T),
the automated warehouse (100) further comprises
a second Y-directional path (2Y) disposed on the first side (X1) in the X-direction (X) relative to the storage area (1) and extending in the Y-direction (Y), and
a second transporter (2T) configured to transport the plurality of articles (W) along the second Y-directional path (2Y) and into and out of a storage row (10) among the plurality of storage rows (10) in the storage area (1), and
the control system (9) causes one of the first transporter (1T) or the second transporter (2T) to transport the articles (W) included in at least one subgroup of the plurality of subgroups, and causes the other of the first transporter (1T) or the second transporter (2T) to transport the articles (W) included in a subgroup other than the at least one subgroup among the plurality of subgroups.
